# EUROPÄISCHE PATENTSCHRIFT

(11) **EP 3 161 355 B1**
(45) Veröffentlichungstag und Bekanntmachung des Hinweises auf die Patenterteilung: **18.07.2018**
(21) Anmeldenummer: 15727668.4
(22) Anmeldetag: 10.06.2015
(51) Int. Cl.: F16J 9/00, F16J 9/20

(54) **KOLBENRING**
PISTON RING
SEGMENT DE PISTON

(30) Priorität: 26.06.2014 DE 102014108973
(43) Veröffentlichungstag der Anmeldung: 03.05.2017
(73) Patentinhaber: Federal-Mogul Burscheid GmbH, 51399 Burscheid (DE)
(72) Erfinder: MITTLER, Richard, 51399 Burscheid (DE); PRÖPPER, Jörn, 51375 Leverkusen (DE)
(74) Vertreter: Becker Kurig Straus
(86) Internationale Anmeldenummer: PCT/EP2015/062904
(87) Internationale Veröffentlichungsnummer: WO 2015/197361

(56) Entgegenhaltungen:
- FR-A- 789 851
- GB-A- 522 024
- US-A- 3 337 938
- US-A- 4 438 937

## Beschreibung

Die vorliegende Erfindung betrifft einen Kolbenring mit verbessertem Trag-, Verschleiß- und Ölabstreifverhalten. Die Erfindung betrifft insbesondere einen Kolbenring, der dazu angepasst ist, die Kolbennutkippung zu kompensieren, die beim Betrieb eines Kolbenmotors auftritt.

Der Kolben eines Verbrennungsmotors deformiert im Betrieb unter dem Einfluss der Verbrennungswärme und der daraus resultierenden Temperaturverteilung in axialer Richtung unterschiedlich. Die höchsten Temperaturen herrschen an der Brennraumseite, während die Temperatur in Richtung des Kurbelgehäuses abnimmt. Die Folge davon ist eine Verkippung der Kolbenringnuten, so dass die Flanken der Kolbenringnut ein Gefälle in Bezug auf die Zylinderachse aufweisen.

Der in der Kolbenringnut befindliche Kolbenring legt sich mit seiner unteren Flanke unter Einfluss des Verbrennungsdrucks vollflächig an die untere Flanke der Kolbennut an und nimmt daher mit seinem Querschnitt dieselbe Neigung wie die Nut an. Daraus resultiert, dass der Pivotpunkt der Kolbenring-Lauffläche sich nach oben verschiebt und damit die hydrodynamischen Eigenschaften verändert, einhergehend mit einem veränderten Trag- / Verschleißverhalten zur oberen Laufkante hin, vergrößerten Ölfilmdicken und schlechterem Ölabstreifverhalten.

Eine bekannte Lösung dieses Problems besteht darin, die Nutflanken des Kolbens mit einem entsprechenden Gefälle zu fertigen, das diesen Effekt ausgleicht, so dass sich im Betrieb unter dem Temperatureinfluss die Nutflanken senkrecht zur Zylinderlaufbahn stellen. Mit anderen Worten, die Kolbenringnuten werden nicht mit einem rechteckigen Querschnitt mit zur Zylinderlaufbahn senkrechten Flanken ausgebildet, sondern mit einem trapezförmigen Querschnitt mit zur Zylinderlaufbahn schrägen Flanken (jeweils im thermisch nicht verformten Zustand). Dies ist jedoch im Vergleich zu Kolbenringnuten mit herkömmlich rechtwinkligem Querschnitt mit einem erhöhten Fertigungsaufwand bei der Herstellung des Kolbens verbunden und daher nachteilig.

Die Aufgabe der vorliegenden Erfindung besteht daher darin, einen Kolbenring bereitzustellen, der den Effekt der Nutverkippung bei einem Kolben mit herkömmlichen Nuten mit rechteckigem Querschnitt kompensiert. Dies ist kostengünstiger und einfacher zu realisieren als die bekannte Lösung angepasster Kolbenringnuten, außerdem können so Motoren mit herkömmlichen Kolben auch nachträglich mit verbesserten Kolbenringen ausgerüstet werden.

Gemäß einem Aspekt der Erfindung wird ein Kolbenring für einen Kolben eines Kolbenmotors bereitgestellt, umfassend:
- eine außenseitige Umfangsfläche;
- eine innenseitige Umfangsfläche;
- eine in Richtung der Kolbenoberseite weisende obere Flanke; und
- eine in Richtung der Kolbenunterseite weisende untere Flanke;
wobei
- die untere Flanke gegenüber der oberen Flanke schräg verläuft, so dass die axiale Höhe des Kolbenrings an der außenseitigen Umfangsfläche größer als an der innenseitigen Umfangsfläche ist; und
- wobei auf jeder Seite des Stoßes des Kolbenrings zumindest eine Aussparung in der oberen Flanke vorgesehen ist.

Um dem Effekt der Nutkippung entgegen zu wirken, wird ein Kolbenring mit Kompensation der Kolbennutkippung vorgeschlagen. Dazu wird der Ring an seinem Außendurchmesser mit einer größeren axialen Höhe ausgestattet, während die Höhe am Innendurchmesser die Nominalhöhe erhält. Die vergrößerte axiale Höhe am Außendurchmesser ist so zu wählen, dass die untere Flanke des Rings das gleiche Gefälle erhält wie die Nut im Betrieb des Motors.

Als Folge der an der außenseitigen Umfangsfläche vergrößerten Höhe wird dort das axiale Spiel bzw. der Abstand zwischen Ring und Nut reduziert. Dies zieht einen verringerten Gasfluss an dieser Stelle und somit einen reduzierten Druckaufbau an der oberen Flanke und der innenseitigen Umfangsfläche nach sich. Dies ist nachteilig, da somit der Kolbenring im diesbezüglich besonders kritischen Stoßbereich nicht mehr optimal an die Zylinderwand bzw. -Laufbuchse gepresst wird und die Gasdichtigkeit daher abnimmt. Es kommt dadurch unter anderem zu erhöhten Blow-By-Verlusten.

Dies wird erfindungsgemäß dadurch ausgeglichen, dass in die obere Flanke des Rings zumindest am Umfang im Bereich der Stoßenden mindestens je eine Ausnehmung, z.B. in Form einer Mulde, eingebracht wird. Dadurch wird hier gezielt der Abstand zwischen oberer Flanke des Kolbenrings und der oberen Nutflanke vergrößert bzw. dem Wert angenähert, der bei einem konventionellen Kolbenring vorliegen würde. Als Resultat wird der Gasfluss erhöht, so dass der Kolbenring wieder in der gewünschten Weise an die Zylinderwand bzw. - Laufbuchse gepresst wird.

Gemäß einer Ausführungsform erstrecken sich die Aussparungen in die außenseitige Umfangsfläche hinein.

Die erfindungsgemäße Aussparung kann nur in der oberen Flanke angeordnet sein oder sich auch in die außenseitige Umfangsfläche hinein erstrecken.

Gemäß einer Ausführungsform sind auf jeder Seite des Stoßes mehrere voneinander beabstandete Aussparungen vorgesehen.

Um den Gasfluss in der gewünschten Weise zu beeinflussen, können weitere Ausnehmungen der gleichen Form in bestimmten Abständen in die obere Flanke eingebracht werden.

Gemäß einer Ausführungsform sind die Aussparungen in einem Bereich von 0-90° beidseitig vom Stoß aus angeordnet.

Gemäß einer Ausführungsform beträgt der Abstand der Aussparungen von der innenseitigen Umfangsfläche mindestens 1/3 der radialen Länge der oberen Flanke. Oder mit anderen Worten, die Aussparungen erstrecken sich über maximal 2/3 der radialen Wanddicke von der außenseitigen Umfangsfläche aus.

Gemäß einer Ausführungsform bildet die obere Flanke mit der innenseitigen Umfangsfläche einen rechten Winkel.

Gemäß einer Ausführungsform ist die Abschrägung der unteren Flanke angepasst, die Kippung der entsprechenden Kolbennut des Kolbens im Betrieb des Kolbenmotors zu kompensieren.

Bevorzugt wird die Schräge der unteren Flanke des Kolbenrings so ausgelegt, dass bei der im Betrieb auftretenden Nutkippung diese im Wesentlichen ausgeglichen wird.

Bevorzugt hängen die Abmessungen axiale Tiefe und/oder radiale Breite und/oder tangentiale Länge der Aussparungen vom Abstand zum Ringstoß und/oder von dem radialen Abstand von der Innenseite des Kolbenrings ab. Alternativ oder zusätzlich ist bevorzugt, dass die Anzahl und/oder die Abstände der Aussparungen vom Abstand zum Ringstoß und/oder von dem radialen Abstand von der Innenseite des Kolbenrings abhängen.

Kurze Beschreibung der Figuren
- Fig. 1: ist eine Querschnittsansicht eines herkömmlichen Kolbenrings in einer verkippten Ringnut;
- Fig. 2: ist eine Querschnittsansicht eines Kolbenrings mit gemäß der Erfindung abgeschrägter unterer Flanke;
- Fig. 3: ist eine Querschnittsansicht eines Kolbenrings von Fig. 2 in einer unverkippten Ringnut;
- Fig. 4: ist eine Querschnittsansicht des Kolbenrings von Fig. 3 in der verkippten Ringnut;
- Fig. 5: ist eine Querschnittsansicht eines Kolbenrings gemäß einer Ausführungsform in einer unverkippten Ringnut;
- Fig. 6: ist eine Querschnittsansicht eines Kolbenrings gemäß einer anderen Ausführungsform in einer unverkippten Ringnut;
- Fig. 7: ist eine Querschnittsansicht eines Kolbenrings gemäß einer weiteren Ausführungsform in einer unverkippten Ringnut;
- Fig. 8: ist eine dreidimensionale Querschnittsansicht eines Kolbenrings gemäß der Ausführungsform von Fig. 6; und
- Fig. 9: zeigt in einer Aufsicht auf eine Ausführungsform eines Kolbenrings die Winkelverteilung der Aussparungen in Bezug auf den Ringstoß.

### Detaillierte Beschreibung

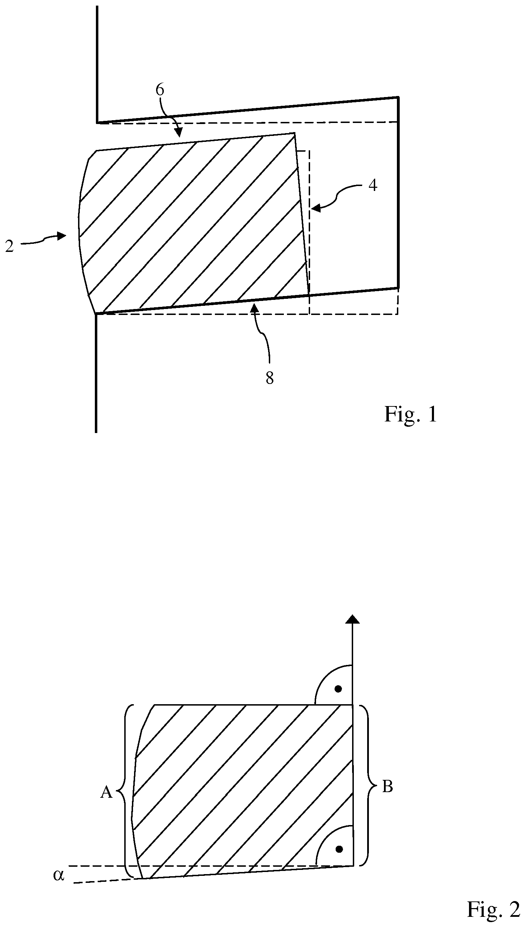

In Fig. 1 ist ein herkömmlicher Kolbenring mit parallel verlaufenden, rechteckigen Flanken gezeigt. Die Situation mit nicht verkippter Kolbenringnut ist gestrichelt dargestellt. In kaltem Zustand des betreffenden Motors ist die Geometrie der Kolbenringnut rechtwinklig. Durch die im Betrieb des Motors in axialer Richtung unterschiedlichen thermischen Belastungen (hohe thermische Belastung am Kolbenboden, geringer werdende thermische Belastung in Richtung Zylinderblock) kommt es zu unterschiedlichen thermisch bedingten Verformungen. Dadurch verkippt die Ringnut in der mit durchgezogenen Strichen gezeigten Weise (nicht zwingend maßstabsgetreu).

Im Motorbetrieb tritt durch die auftretenden Gasdrücke bei der Verbrennung Gas an der oberen Flanke 6 des Kolbenrings vorbei in den Raum zwischen Ringnut und Kolbenring ein. Dadurch wird der Kolbenring in gewollter Weise nach unten und nach außen gedrückt, um gegen die Zylinderwand bzw. Laufbuchse abzudichten. Der ebenfalls mit einer rechteckigen Geometrie ausgeführte herkömmliche Kolbenring legt sich durch diesen Effekt mit seiner unteren Flanke 8 vollflächig an die untere Flanke der Kolbenringnut an. Da die Kolbenringnut durch die thermischen Einflüsse verkippt ist und deren untere Flanke somit schräg verläuft, bewirkt dies eine Verdrehung des Kolbenring in Relation zur Situation bei kaltem Motor.

Der Pivotpunkt des Kolbenrings, d.h. der Kontaktpunkt der balligen Lauffläche mit der Zylinderwand/-laufbuchse, wandert dadurch gegenüber dem unverformten Zustand nach oben. Dies führt zu einer Verschlechterung der hydrodynamischen Eigenschaften, das Trag- und Verschleißverhalten wird in Richtung der oberen Flanke 6 des Kolbenrings verschoben bzw. erhöht. Es treten größere Ölfilmdicken und durch den mit der Drehung einhergehenden größeren Abstand der unteren Laufkante von Zylinderwand bzw. Laufbuchse ein verschlechtertes Ölabstreifverhalten auf.

Erfindungsgemäß wird dies dadurch behoben, dass ein Kolbenring mit einer schrägen unteren Flanke 8 bereitgestellt wird. Der Ring weist an der außenseitigen Umfangsfläche eine größere axiale Höhe A auf als die axiale Höhe B an der innenseitigen Umfangsfläche. Die vergrößerte axiale Höhe A an der außenseitigen Umfangsfläche ist dabei so zu wählen, dass die untere Ringflanke 8 das gleiche Gefälle α erhält wie die Ringnut im verkippten Zustand. Ein solcher Kolbenring ist in Fig. 2 im Querschnitt gezeigt.

Dadurch wird erreicht, dass im Motorbetrieb der Kolbenring wie vorgesehen an der Zylinderwand bzw. Laufbuchse anliegt. Die vorstehend genannten Effekte, die die Effizienz des Motors verschlechtern, werden damit verhindert.

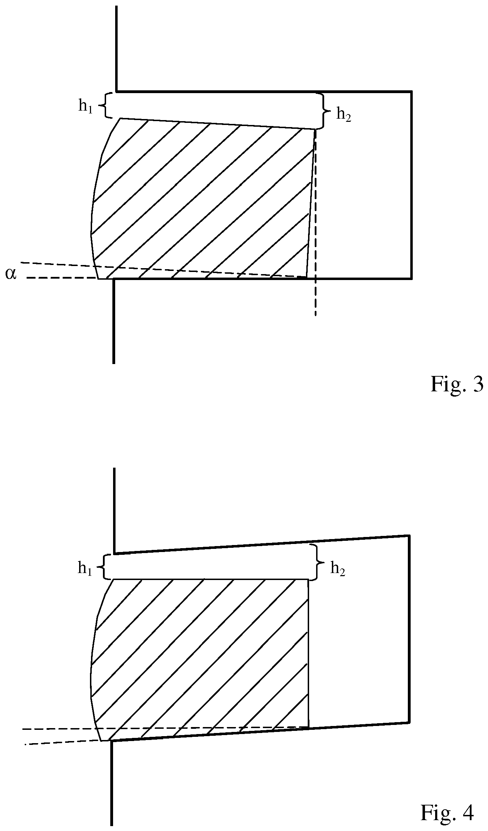

Allerdings führt diese geänderte Geometrie dazu, dass an der außenseitigen Umfangsfläche 2 das axiale Spiel zwischen Ringnut und Kolbenring gegenüber dem herkömmlichen Rechteck-Kolbenring bzw. dem Spiel an der innenseitigen Umfangsfläche 4 verringert ist (h₁ < h₂), wie es in den Figuren 3 (unverkippte Ringnut) und 4 (verkippte Ringnut) zu sehen ist. Daraus resultiert ein verringerter Gasfluss und somit wird der Druck an der oberen Flanke 6 und der innenseitigen Umfangsfläche 4 des Kolbenrings reduziert. Der gewünschte Effekt des Anlegens unter Verbrennungsdruck an die Zylinderwand bzw. Laufbuchse wird so ebenfalls verringert, was zu größerem Abstand von Zylinderwand bzw. Laufbuchse führt. Daraus können wiederum größere Ölfilmdicken, verringerte Dichtigkeit und verschlechtertes Ölabstreifverhalten folgen. Dies tritt insbesondere im Bereich des Ringstoßes auf.

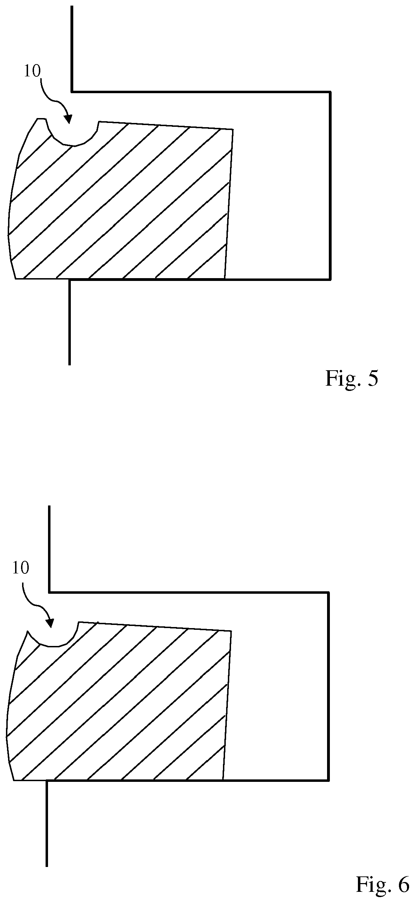

Erfindungsgemäß wird daher weiterhin vorgeschlagen, auf jeder Seite des Stoßes des Kolbenrings zumindest eine Aussparung 10 in der oberen Ringflanke vorzusehen. Durch die Aussparung 10 wird das Spiel bzw. der Abstand zwischen der oberen Flanke der Ringnut und der oberen Flanke 6 des Kolbenrings lokal vergrößert. Dadurch wird der Gasfluss erhöht, so dass der Kolbenring wieder in der gewünschten Weise vom Verbrennungsdruck an die Zylinderwand bzw. Laufbuchse gedrückt werden kann. Verschiedene beispielhafte Ausführungsformen sind in den Figuren 5-7 gezeigt.

Fig. 5 zeigt eine Variante, bei der die Aussparung 10 im Wesentlichen halbrund ausgeführt ist. Die Aussparung befindet sich nur in der oberen Flanke 6 des Kolbenrings, d.h. sie ragt nicht bis in die Lauffläche 2 hinein. Bei der hier gezeigten bevorzugten Ausführungsform ist die Aussparung 10 derart angeordnet, dass sie im Wesentlichen mittig unter der oberen Kante der Ringnut liegt. Diese Variante ist insbesondere geeignet für Kolbenringe mit einem ausreichend großen Überstand über die Ringnut. Vorteilhaft ist hier, dass die Lauffläche 2 unberührt bleibt.

Allgemein gilt, dass, um der Drosselung des Gasflusses entgegenzuwirken, die Aussparung(en) im Bereich der engsten Stelle zwischen Nut und Ring bereits eine gewisse Tiefe in axialer Richtung aufweisen sollte(n). Das Ziel ist es dabei, den Querschnitt senkrecht zur Gasflussrichtung zu vergrößern.

Fig. 6 zeigt eine Variante, bei der die Aussparung 10 auch teilweise in die Lauffläche 2 des Kolbenrings hineinragt. Diese Variante ist insbesondere geeignet für Kolbenringe, die nur relativ wenig über die Nut hinausstehen. Durch das Hineinragen in die Lauffläche 2 wird dennoch ein ausreichender Abstand zur Ringnut und somit ausreichend Raum für den Gasdurchtritt geschaffen. Nachteilig kann hierbei sein, dass die Fläche der Lauffläche 2 zumindest lokal verringert wird.

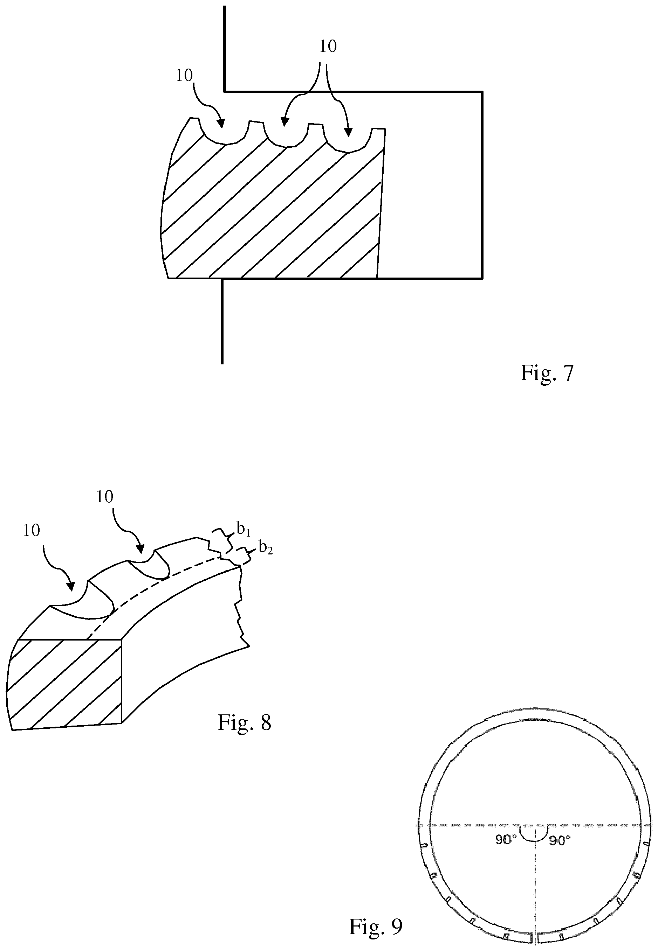

Fig. 7 zeigt eine weitere Variante, bei der in diesem Fall drei Aussparungen 10 in radialer Richtung hintereinander angeordnet sind. Dies dient der Verstärkung des Gasdurchtritts. Die Form, Tiefe, Anzahl sowie die Abstände von Aussparungen 10 sowohl in radialer als auch tangentialer Richtung sind variabel und können flexibel gestaltet werden. So kann etwa die axiale Tiefe der Aussparungen bei Anordnung radial hintereinander in Richtung auf die Ringinnenseite abnehmend ausgelegt sein (nicht gezeigt).

Fig. 8 zeigt eine Ausführungsform, gemäß der die Aussparungen 10 sowohl in der Lauffläche 2 als auch der oberen Flanke 6 des Kolbenrings vorgesehen sind, wobei die radiale Abmessung so gewählt ist, dass sie maximal 2/3 der radialen Breite des Kolbenrings beträgt. Wie hier ebenfalls zu erkennen ist, verringern sich bei dieser Ausführungsform die Tiefe und auch die tangentiale Breite der Aussparungen 10 in Richtung auf die innenseitige Umfangsfläche des Kolbenrings zu.

Durch entsprechende Variation der Parameter "Dimensionen" und "Abstände" der Aussparungen kann der Anpressdruck durch die Verbrennung flexibel eingestellt werden, z.B. in Abhängigkeit von dem Abstand vom Ringstoß, in Abhängigkeit von der lokalen Vorspannung etc. Dies kann einerseits durch das Vorsehen von mehr (in radialer Richtung) Aussparungen an Stellen geschehen, die näher am Stoß liegen, oder durch kleinere Abstände der Aussparungen in Richtung zum Stoß hin, oder durch entsprechende Wahl einer größeren axialen Tiefe / radialen Breite / tangentialen Länge in Abhängigkeit vom Abstand zum Ringstoß. Eine weitere mögliche Alternative ist eine einzige in tangentialer Richtung lange Aussparung pro Seite des Ringstoßes, wobei diese dann in ihren Abmessungen "axiale Tiefe" / "radiale Breite" / "tangentiale Länge" so variiert, dass in Abhängigkeit vom Abstand zum Ringstoß der Anpressdruck an Zylinderwand bzw. Laufbuchse entsprechend eingestellt ist.

Die Stoßenden unterscheiden sich vom gegenüber liegenden Ringrücken durch eine schlechtere Anpassungsfähigkeit an die Zylinderkrümmung, da der Kolbenring an den Stoßenden "weicher" als am Ringrücken ist. Die radiale Druckverteilung ist somit abhängig von der Position auf dem Kolbenring in Relation zu den Stoßenden bzw. dem Ringrücken. Da es somit in erster Linie am Ringstoß nötig ist, ein verbessertes Anliegen des Kolbenrings zu erreichen, genügt es erfindungsgemäß, die Aussparungen im Stoßbereich vorzusehen, um durch den Verbrennungsdruck das Anliegen zu verstärken. Fig. 9 zeigt eine beispielhafte Anordnung, bei der die Aussparungen in Abständen zueinander und bis maximal 90° vom Ringstoß aus angeordnet sind. Allgemein gilt, dass erfindungsgemäß die Anordnung und Dimensionierung der Aussparungen abhängig von der radialen Druckverteilung des Kolbenrings so gewählt werden, dass im Motorbetrieb an allen Stellen des Kolbenrings möglichst der gleiche Anpressdruck an die Zylinderwand bzw. -laufbuchse erhalten wird.

Sofern nicht explizit anders beschrieben, können grundsätzlich alle Einzelmerkmale der beschriebenen beispielhaften Ausführungsformen beliebig miteinander kombiniert werden.

## Patentansprüche

1. Kolbenring für einen Kolben eines Kolbenmotors, umfassend:
- eine außenseitige Umfangsfläche (2);
- eine innenseitige Umfangsfläche (4);
- eine in Richtung der Kolbenoberseite weisende obere Flanke (6); und
- eine in Richtung der Kolbenunterseite weisende untere Flanke (8);
wobei
- die untere Flanke (8) gegenüber der oberen Flanke (6) schräg verläuft, so dass die axiale Höhe (A) des Kolbenrings an der außenseitigen Umfangsfläche (2) größer als die axiale Höhe (B) an der innenseitigen Umfangsfläche (4) ist; und
**dadurch gekennzeichnet, dass** auf jeder Seite des Stoßes des Kolbenrings mehrere tangential voneinander beabstandete Aussparungen (10) in der oberen Flanke (6) vorgesehen sind, die sich in die außenseitige Umfangsfläche (2) hinein erstrecken.

2. Kolbenring nach Anspruch 1, wobei die Aussparungen (10) in einem Bereich von 0-90° beidseitig vom Stoß aus angeordnet sind.

3. Kolbenring nach einem der vorhergehenden Ansprüche, wobei der Abstand der Aussparungen (10) von der innenseitigen Umfangsfläche mindestens 1/3 der radialen Länge der oberen Flanke (6) beträgt.

4. Kolbenring nach einem der vorhergehenden Ansprüche, wobei die obere Flanke (6) mit der innenseitigen Umfangsfläche (4) einen rechten Winkel bildet.

5. Kolbenring nach einem der vorhergehenden Ansprüche, wobei die Abschrägung der unteren Flanke (8) angepasst ist, die Kippung der entsprechenden Kolbennut des Kolbens im Betrieb des Kolbenmotors zu kompensieren.

6. Kolbenring nach einem der vorhergehenden Ansprüche, wobei die Abmessungen axiale Tiefe und/oder radiale Breite und/oder tangentiale Länge der Aussparungen (10) vom Abstand zum Ringstoß und/oder von dem radialen Abstand von der Innenseite des Kolbenrings abhängen.

7. Kolbenring nach einem der vorhergehenden Ansprüche, wobei die Anzahl und/oder die Abstände der Aussparungen (10) vom Abstand zum Ringstoß und/oder von dem radialen Abstand von der Innenseite des Kolbenrings abhängen.

## Claims

1. A piston ring for a piston of a piston engine, comprising:
- an external circumferential surface (2);
- an internal circumferential surface (4);
- an upper flank (6) facing in the direction of the piston upper side; and
- a lower flank (8) facing in the direction of the piston underside;
wherein
- the lower flank (8) runs obliquely with respect to the upper flank (6), so that the axial height (A) of the piston ring is greater at the external circumferential surface (2) than the axial height (B) at the internal circumferential surface (4); and
**characterized in that** on each side of the joint of the piston ring several recesses (10), spaced apart from one another tangentially, are provided in the upper flank (6), which extend into the external circumferential surface (2).

2. The piston ring according to claim 1, wherein the recesses (10) are arranged in a range of 0-90° on both sides from the joint.

3. The piston ring according to one of the preceding claims, wherein the distance of the recesses (10) from the internal circumferential surface is at least 1/3 of the radial length of the upper flank (6).

4. The piston ring according to one of the preceding claims, wherein the upper flank (6) forms a right angle with the internal circumferential surface (4).

5. The piston ring according to one of the preceding claims, wherein the chamfer of the lower flank (8) is adapted to compensate the tilting of the corresponding piston groove of the piston in operation of the piston engine.

6. The piston ring according to one of the preceding claims, wherein the dimensions axial depth and/or radial width and/or tangential length of the recesses (10) depend on the distance to the ring joint and/or on the radial distance from the inner side of the piston ring.

7. The piston ring according to one of the preceding claims, wherein the number and/or the distances of the recesses (10) depend on the distance to the ring joint and/or on the radial distance from the inner side of the piston ring.

## Revendications

1. Segment de piston pour un piston d'un moteur à piston, comprenant :
- une surface circonférentielle du côté extérieur (2) ;
- une surface circonférentielle du côté intérieur (4) ;
- un flanc supérieur tourné dans la direction du côté supérieur de piston (6) ; et
- un flanc inférieur tourné dans la direction du côté inférieur de piston (8) ;
dans lequel
- le flanc inférieur (8) s'étend en biais par rapport au flanc supérieur (6), de sorte que la hauteur axiale (A) du segment de piston sur la surface circonférentielle du côté extérieur (2) soit plus grande que la hauteur axiale(B) sur la surface circonférentielle du côté intérieur (4) ; et
**caractérisé en ce que** sur chaque côté de la butée du segment de piston plusieurs cavités (10) espacées les unes des autres tangentiellement sont prévues dans le flanc supérieur (6), qui s'étendent à l'intérieur de la surface circonférentielle du côté extérieur (2).

2. Segment de piston selon la revendication 1, dans lequel les cavités (10) sont disposées dans une zone de 0-90° des deux côtés de la butée.

3. Segment de piston selon une des revendications précédentes, dans lequel l'espacement des cavités (10) par rapport à la surface circonférentielle du côté intérieur s'élève à au moins 1/3 de la longueur radiale du flanc supérieur (6).

4. Segment de piston selon une des revendications précédentes, dans lequel le flanc supérieur (6) forme un angle droit avec la surface circonférentielle du côté intérieur (4).

5. Segment de piston selon une des revendications précédentes, dans lequel le chanfrein du flanc inférieur (8) est adapté afin de compenser le basculement de la rainure de piston correspondante du piston lors du fonctionnement du moteur à piston.

6. Segment de piston selon une des revendications précédentes, dans lequel les dimensions profondeur axiale et/ou largeur radiale et/ou longueur tangentielle des cavités (10) dépendent de l'espacement par rapport à la butée de segment et/ou par rapport à l'espacement radial du côté inférieur du segment de piston.

7. Segment de piston selon une des revendications précédentes, dans lequel le nombre et/ou les espacements des cavités (10) dépendent de l'espacement par rapport à la butée de segment et/ou de l'espacement radial par rapport au côté intérieur du segment de piston.
